# EUROPEAN PATENT APPLICATION

(11) **EP 4 700 969 A1**
(43) Date of publication of application: **25.02.2026**
(21) Application number: 25193741.3
(22) Date of filing: 04.08.2025
(51) Int. Cl.: H01M 50/531, H01M 50/59, H01M 50/586, H01M 50/557, H01M 50/533, H01M 10/42

(54) **SECONDARY BATTERY ELECTRODE**

(30) Priority: 20.08.2024 KR 20240111446
(71) Applicant: SAMSUNG SDI CO., LTD., Yongin-si, Gyeonggi-do 17084 (KR)
(72) Inventor: LEE, Jiseong, Yongin-Si, Gyeonggi-do 17084 (KR); LIM, Byung-Ho, Yongin-Si, Gyeonggi-do 17084 (KR)
(74) Representative: Gulde & Partner

(57) **Abstract**

The present disclosure relates to a secondary battery electrode (210, 220, 310). The secondary battery electrode (210, 220, 310) may include an electrode plate (212, 214 , 222, 224) with an active material layer (212, 222, 420) on at least a portion of a substrate (214, 224), a substrate tab (112, 114, 216, 312, 612) extending outward of the substrate (214, 224) from a region of the substrate (214, 224) free of the active material layer (212, 222, 420), a first coating layer (230, 320, 320_1, 320_2, 614) on at least one of a first surface of the substrate tab (112, 114, 216, 312, 612) or a second surface of the substrate tab (112, 114, 216, 312, 612) opposite the first surface of the substrate tab (112, 114, 216, 312, 612), and a second coating layer (240, 330, 330_1, 330_2) on at least one of a first side surface of the substrate tab (112, 114, 216, 312, 612) or a second side surface of the substrate tab (112, 114, 216, 312, 612) opposite the first side surface of the substrate tab (112, 114, 216, 312, 612), and the first side surface and the second side surface of the substrate tab (112, 114, 216, 312, 612) may be connected to the first surface and the second surface of the substrate tab (112, 114, 216, 312, 612).

## Description

### BACKGROUND

### 1. Field

The present disclosure relates to a secondary battery electrode including a coating layer disposed or placed on a substrate tab.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In a case where the secondary battery is used often or continuously, or exposed to harsh or extreme conditions, a positive electrode and a negative electrode may be more susceptible to electrical contact. If two materials having different polarities in a secondary cell come into electrical contact, an internal short circuit may occur. An internal short circuit may quickly increase the temperature of the secondary cell and, in severe cases, may lead to a fire.

The above information disclosed in this Background section is for enhancement of understanding of the background of the present disclosure, and therefore, it may contain information that does not constitute related (or prior) art.

### SUMMARY

Embodiments of the present disclosure provides a secondary battery electrode intended to overcome the problems described above.

These and other aspects and features of the present disclosure will be described in or will be apparent from the following description of embodiments of the present disclosure.

According to embodiments of the present disclosure, a secondary battery electrode includes: an electrode plate, with an active material layer on at least a portion of a substrate; a substrate tab extending outward of the substrate from a region of the substrate free of the active material layer; a first coating layer on at least one of a first surface of the substrate tab or a second surface of the substrate tab opposite the first surface of the substrate tab; and a second coating layer on at least one of a first side surface of the substrate tab or a second side surface of the substrate tab opposite the first side surface of the substrate tab, and the first side surface and the second side surface of the substrate tab may be connected to the first surface and the second surface of the substrate tab.

According to embodiments of the present disclosure, the substrate tab may include a first region adjacent to the active material layer and may include a second region extending from the first region in a direction away from the active material layer, and the first coating layer and the second coating layer may be on the first region.

According to embodiments of the present disclosure, a width of the first coating layer may be equal to or greater than 9 mm.

According to embodiments of the present disclosure, a width of the first coating layer may be in a range from approximately 12 µm to approximately 18 µm.

According to embodiments of the present disclosure, a width of the second coating layer may be greater than a thickness of the substrate tab.

According to embodiments of the present disclosure, each of the height of a first coating layer and a height of the second coating layer may be in a range from approximately 2.5 mm to approximately 3.1 mm.

According to embodiments of the present disclosure, each of a width of the first coating layer and a width of the second coating layer may be in a range from approximately 2 µm to approximately 8 µm.

According to embodiments of the present disclosure, the electrode plate may be a positive electrode plate.

According to embodiments of the present disclosure, the second coating layer may include at least one of polyimide or ceramic.

According to embodiments of the present disclosure, a height of the first coating layer and a height of the second coating layer may be determined based on a difference in height between the positive electrode plate and a negative electrode plate.

According to embodiments of the present disclosure, the second coating layer may electrically insulate the first side surface or the second side surface of the substrate tab.

According to embodiments of the present disclosure, the first coating layer and the second coating layer may be formed integrally.

According to embodiments of the present disclosure, a secondary electrode manufacturing method includes: preparing an electrode plate with an active material layer placed on at least a portion of a substrate; forming a substrate tab extending outward of the substrate from a region of the substrate free of the active material layer; forming a first coating layer on at least one of a first surface of the substrate tab or a second surface of the substrate tab opposite the first surface of the substrate tab; and forming a second coating layer on at least one of a first side surface of the substrate tab or a second side surface of the substrate tab opposite the first side surface of the substrate tab, and the first side surface and the second side surface of the substrate tab are connected to the first surface and the second surface of the substrate tab.

According to embodiments of the present disclosure, the forming of the second coating layer may include forming the first coating layer and the second coating layer together by surrounding the first surface, the second surface, and the first side surface of the substrate tab, or the first surface, the second surface, and the second side surface of the substrate tab, with a coating tape.

According to embodiments of the present disclosure, the forming of the second coating layer may include forming the second coating layer by applying a coating solution to the first side surface or the second side surface of the substrate tab.

According to embodiments of the present disclosure, the substrate tab may include a first region adjacent to the active material layer and may include a second region extending from the first region in a direction away from the active material layer, and the first coating layer and the second coating layer may be placed on the first region.

According to embodiments of the present disclosure, the electrode plate may be a positive electrode plate, and a height of the first coating layer and a height of the second coating layer may be determined based on a difference in height between the positive electrode plate and a negative electrode plate.

According to embodiments of the present disclosure, the second coating layer may electrically insulate the first side surface or the second side surface of the substrate tab.

According to embodiments of the present disclosure, the first coating layer and the second coating layer may be formed integrally.

According to embodiments of the present disclosure, a secondary electrode manufacturing method includes: preparing an electrode plate with an active material layer placed on at least a portion of a substrate; forming a first coating layer on at least a portion of a region of the substrate adjacent to the active material layer; forming a substrate tab by punching the region of the substrate adjacent to the active material layer; and forming a second coating layer on at least one of a first side surface or an second side surface of the substrate tab.

According to various embodiments of the present disclosure, the first surface (e.g., top surface) of the substrate tab and/or the second surface (e.g., bottom surface) of the substrate tab may be protected by the coating layer. In some embodiments, the first surface or opposite surfaces of the substrate tab may be protected by the coating layer. As a result, in an electrode assembly which has been repeatedly charged and discharged and/or an electrode assembly exposed to heat, the substrate tab may be prevented from being exposed. In some embodiments, a portion of the substrate tab of the positive electrode may be prevented from being exposed and forming a short circuit with the negative electrode. That is, by preventing contact between the positive electrode and the negative electrode, fire may be prevented and integrity may be obtained.

According to various embodiments of the present disclosure, even if the separator provided between the positive electrode plate and the negative electrode plate is damaged in a high temperature environment, and the coating layer disposed on the substrate tab of the positive electrode plate is damaged, a short circuit may not occur. Accordingly, due to the coating layer disposed on the side surface(s) of the substrate tab, the secondary battery including the electrode according to embodiments of the present disclosure may be used more safely due to a reduced risk of fire.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a secondary battery according to embodiments of the present disclosure;
FIG. 2 illustrates an example of a first electrode and a second electrode according to embodiments of the present disclosure;
FIG. 3 illustrates an example of an electrode according to embodiments of the present disclosure;
FIG. 4 illustrates a cross-sectional view of a substrate tab according to embodiments of the present disclosure;
FIG. 5 illustrates an example of the substrate tab of FIG. 4 and coating layers according to embodiments of the present disclosure;
FIG. 6 illustrates a first electrode and a second electrode experiencing a short circuit in a comparative example of the present disclosure;
FIG. 7 is an image of a first electrode assembly after a thermal exposure test is performed on the first electrode assembly in a comparative example of the present disclosure;
FIG. 8 is an image of a second electrode assembly after a thermal exposure test is performed on the second electrode assembly in an example of the present disclosure;
FIG. 9 illustrates a flowchart of an example secondary battery electrode manufacturing method according to an embodiment of the present disclosure; and
FIG. 10 illustrates another flowchart of an example secondary battery electrode manufacturing method according to one embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

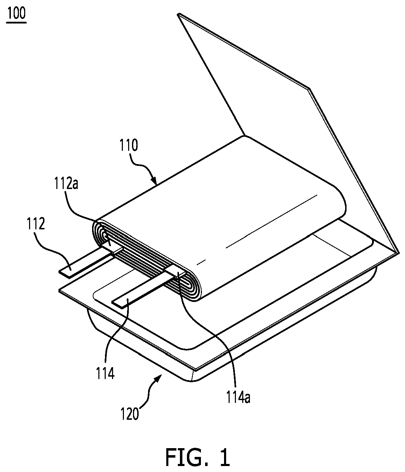

FIG. 1 illustrates a perspective view of a secondary battery 100 according to embodiments of the present disclosure. The secondary battery 100 may include an electrode assembly 110 and a case 120.

Referring to FIG. 1, the secondary battery 100 may be a pouch secondary battery. However, the shape of the secondary battery 100 is not limited thereto, and the secondary battery 100 may be a cylindrical secondary battery, a prismatic secondary battery, a button secondary battery, or the like.

The electrode assembly 110 may include a first electrode, a second electrode, and a separator. The separator may be provided between the first electrode and the second electrode. The electrode assembly 110 may be constructed by winding or stacking the first electrode, the second electrode, and the separator. Referring to FIG. 1, the electrode assembly 110 is shown as being of a wound type, but may be a stacked type. The shape of the electrode assembly is not limited to the disclosed embodiments.

The secondary battery electrode according to one or more embodiments may refer to a first electrode or a second electrode included in the electrode assembly 110. The first electrode may include a first electrode plate (also referred to as a first substrate) having a first active material layer disposed on at least a portion of the first substrate. A first substrate tab 112 may extend outwardly from a first uncoated portion of the first substrate where the first active material layer is not positioned, and the first substrate tab 112 may be electrically connected to the case 120 (e.g., a first terminal included in the case 120).

The second electrode (also referred to as a second substrate) may include a second electrode plate with a second active material layer disposed on at least a portion of the second substrate. A second substrate tab 114 may extend outwardly from a second uncoated portion of the second substrate where the second active material layer is not disposed, and the second substrate tab 114 may be electrically connected to the case 120 (e.g., a second terminal included in the case 120).

Referring to FIG. 1, the first substrate tab 112 and the second substrate tab 114 may extend in the same direction from the first electrode and the second electrode, respectively, such that the first substrate tab 112 and the second substrate tab 114 are formed on a first side of the electrode assembly 110. However, this is not intended to be limiting, and the first substrate tab 112 of the first electrode may be formed on the first side of the electrode assembly 110 and the second substrate tab 114 of the second electrode may be formed on a second side of the electrode assembly 110.

Referring to FIG. 1, the first substrate tab 112 and the second substrate tab 114 formed on the first side of the electrode assembly 110 may be connected to external terminals (not shown) by forming respective lead tabs, or may be connected to external terminals (not shown) via strip terminals.

The first electrode may function as a positive electrode. In this case, the first substrate may include, for example, aluminum foil, and the first active material layer may include, for example, a transition metal oxide. The second electrode may function as a negative electrode. In this case, the second substrate may include, for example, copper foil or nickel foil, and the second active material layer may include, for example, graphite.

The separator may function to prevent short-circuiting of the first and second electrodes while allowing lithium ions to migrate. The separator may include, for example, but is not limited to, a polyethylene film, a polypropylene film, a polyethylene-polypropylene film, or the like.

The case 120 may accommodate the electrode assembly 110 and electrolyte, and form the contour of the secondary battery. For example, the case 120 may include a receiving portion configured to receive the electrode assembly 110 and a cover plate configured to enclose the receiving portion. However, the shape of the case 120 is not limited thereto, and the case 120 may be configured in a variety of shapes, such as a circular shape, a prismatic shape, and the like. The case may also be formed of a metal, such as stainless steel, aluminum, an aluminum alloy, nickel-plated steel, a laminated film or plastic for forming a pouch, or the like.

Referring to FIG. 1, the case 120 may include a receiving portion configured to receive the electrode assembly 110 and a cover configured to enclose the receiving portion. The electrode assembly 110 may be inserted through an opening formed in a first side of the receiving portion, and the opening in the receiving portion may be enclosed by the cover. The area where the receiving portion and the cover join may be coupled by sealing using a sealing material.

In an embodiment, A and B coating layers 112a and 114a may be disposed on at least portions of the substrate tabs 112 and 114 by applying a coating solution or surrounding the at least portions with a coating tape. For example, the A coating layer 112a may include an A_1 coating layer and an A_2 coating layer. The A_1 coating layer may be disposed on at least one of a first surface of the first substrate tab 112 or a second surface of the first substrate tab 112 opposite the first surface. In some embodiments, the A_2 coating layer may be placed or disposed on the first surface of the first substrate tab 112 or on opposite surfaces of the first substrate tab connecting the first surface of the first substrate tab 112 and the second surface of the first substrate tab 112. Referring to FIG. 1, the A_1 coating layer and the A_2 coating layer may be formed integrally (e.g., formed as a single, unified piece), but are not limited thereto. For example, the A_1 coating layer and the A_2 coating layer may be distinct from each other. Similarly, the B coating layer 114a may include a B_1 coating layer and a B_2 coating layer. The B_1 coating layer may be disposed on at least one of a first surface of the second substrate tab 114 or a second surface of the second substrate tab 114 opposite the first surface. In some embodiments, the B_2 coating layer may be disposed on at least one of the first surface of the second substrate tab 114 or the first surface or opposite surfaces of the first substrate tab connecting the first surface of the second substrate tab 114 and the second surface of the second substrate tab 114. Referring to FIG. 1, the B_1 coating layer and the B_2 coating layer may be formed integrally, but are not limited thereto. For example, the B_1 coating layer and the B_2 coating layer may be distinct from each other.

In the above-described configuration, the first surface (e.g., top surface) of the substrate tab 112, 114 and/or the second surface (e.g., bottom surface) of the substrate tab may be protected by the coating layer. In some embodiments, the first surface or opposite surfaces of the substrate tab 112, 114 may be protected by the coating layer. In some embodiments, in an electrode assembly which has been repeatedly charged and discharged and/or an electrode assembly exposed to heat, exposure of the substrate tab may be reduced or prevented. In some embodiments, exposure of a portion of the substrate tab of the positive electrode that may lead to a short circuit with the negative electrode may be reduced or prevented. In some embodiments, by preventing or lessening contact between the positive electrode and the negative electrode, fire may be prevented or reduced, and integrity may be obtained.

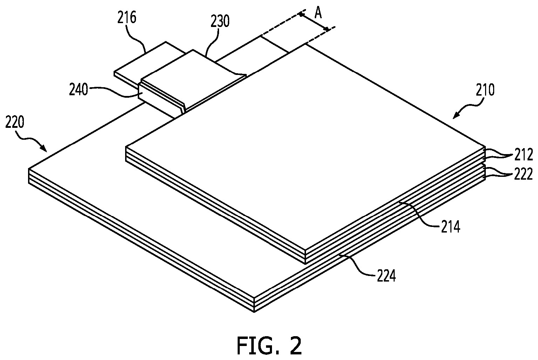

FIG. 2 illustrates an example of a first electrode 210 and a second electrode 220 according to embodiments of the present disclosure. Referring to FIG. 2, the first electrode 210 may include first electrode plates 212 and 214. The first electrode plates may include a first active material layer. Hereinafter, reference number 212 may be used to reference either the first electrode plate or the first active material layer. The first electrode plate 214 may also be referred to as a first substrate. In some embodiments, the first active material layer 212 is disposed on at least a portion of the first substrate 214. For example, the first active material layer 212 may be disposed on at least one of a first surface of the first substrate 214 or a second surface of the first substrate 214 of the first substrate 214 opposite the first surface. In some embodiments, the first electrode 210 may include a first substrate tab 216 extending outward of the first substrate 214 in a region of the first substrate 214 where the first active material layer 212 is not disposed. For example, the first substrate tab 216 may extend outward from a first uncoated portion of the first substrate 214 where the first active material layer 212 is not disposed.

Similarly, the second electrode 220 may include second electrode plates 222 and 224 with a second active material layer. Hereinafter, reference number 222 may be used to reference either the second electrode plate or the second active material layer. The second electrode plate 224 may also be referred to as a second substrate. In some embodiments, the second active material layer 222 is disposed on at least a portion of the second substrate 224. For example, the second active material layer 222 may be disposed on at least one of a first surface of the second substrate 224 or a second surface of the second substrate 224 opposite the first surface of the second substrate 224. Although not shown in FIG. 2, the second electrode 220 may include a second substrate tab extending outward of the second substrate 224 in a region of the second substrate 224 where the second active material layer 222 is not disposed.

In FIG. 2, the first substrate tab 216 and the second substrate tab are collectively referred to as the substrate tab 216, and the description is made with reference to the substrate tab. Similarly, the first substrate 214 and the second substrate 224 are collectively referred to as the substrate 214, the first active layer 212 and the second active layer 222 are collectively referred to as the active layer 212, and the description is made with reference to the substrate and the active layers.

A first coating layer 230 may be disposed on at least one of a first surface of the substrate tab 216 or a second surface of the substrate tab opposite the first side of the substrate tab. The first coating layer 230 may be disposed parallel to the active material layer 212. At least a portion of the first coating layer 230 may be disposed on the active material layer.

A second coating layer 240 may be disposed on a side surface of the substrate tab 216 connected to the first surface of the substrate tab and the second surface of the substrate tab. For example, the second coating layer 240 may be disposed on the first side surface or the opposite side surfaces of the substrate tab 216. The second coating layer 240 may be disposed perpendicular to the active material layer 212. At least a portion of the second coating layer 240 may be disposed on the active material layer. For example, at least a portion of the second coating layer 240 may be disposed on a side surface of the active material layer.

In an embodiment of the present disclosure, the first electrode 210 may be a positive electrode, and the first electrode plates 212 and 214 may be positive electrode plates. The second electrode 220 may be a negative electrode, and the second electrode plates 222 and 224 may be negative electrode plates.

In an embodiment of the present disclosure, one or more (e.g., each) of the first coating layer 230 and the second coating layer 240 may include an insulating material. In some embodiments, the insulating material may provide electrical insulation to reduce or prevent current from passing therethrough. For example, one or more (e.g., each) of the first coating layer 230 and the second coating layer 240 may include an organic insulating material or an inorganic insulating material. For example, one or more (e.g., each) of the first coating layer 230 and the second coating layer 240 may include at least one of polyimide or ceramic. In some embodiments, the first coating layer 230 may electrically insulate the first and second surfaces of the substrate tab 216 from external objects (e.g., other electrode plates). In some embodiments, the second coating layer 240 may insulate the first side surface or the opposite side surface of the substrate tab 216 from external objects.

In an embodiment of the present disclosure, the height of the second electrode plates 222 and 224 may be different from the height of the first electrode plates 212 and 214. For example, the height of the second electrode plates 222 and 224 may be greater than the height of the first electrode plates 212 and 214. The height of the first coating layer 230 and the height of the second coating layer 240 may be determined based on a height difference "A" between the first electrode plate and the second electrode plate. For example, the height of the first coating layer 230 and the height of the second coating layer 240 may be greater than the height difference "A" between the first electrode plate and the second electrode plate. In some embodiments, the first coating layer 230 and the second coating layer 240 may prevent or hinder the substrate tab 216 from being electrically connected to the electrode plate facing the substrate tab, and the substrate tab, and may prevent short-circuiting.

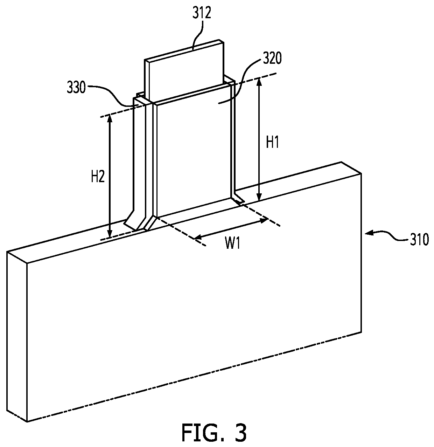

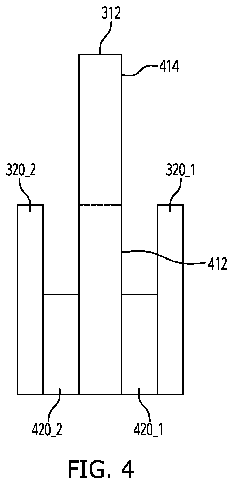

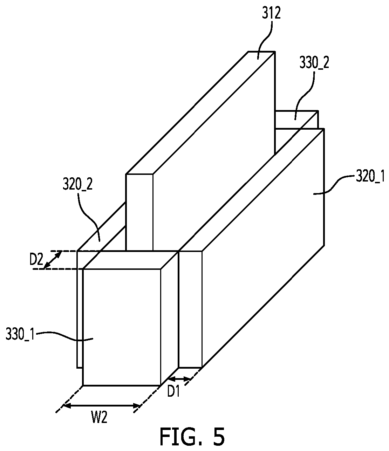

FIG. 3 illustrates an example of an electrode 310 according to embodiments of the present disclosure. FIG. 4 illustrates a cross-sectional view of a substrate tab 312 according to embodiments of the present disclosure. FIG. 5 illustrates an example of the substrate tab 312 and coating layers 320 and 330 according to embodiments of the present disclosure. The electrode 310, substrate tab 312, and coating layers 320, 330 may be similar to respectively the electrode 210, 220, substrate tab 216, and coating layers 230, 240 of FIG. 2.

The electrode 310 may include a substrate tab 312 extending from a first side of the substrate. A first coating layer 320 may be disposed on at least one of a first surface of the substrate tab or a second surface of the substrate tab opposite the first surface of the substrate tab. The second coating layer 330 may be disposed on a side of the substrate tab connected to the first surface of the substrate tab and the second surface of the substrate tab.

Referring to FIG. 3, the first coating layer 320 may be disposed relative to a boundary where the electrode plate included in the electrode contacts the substrate tab 312. In another example, the first coating layer 320 may be disposed at a preset or predetermined distance from the boundary where the electrode plate included in the electrode and the substrate tab 312 contact each other in a direction away from the substrate tab 312.

In an embodiment of the present disclosure, the height H1 of the first coating layer and the height H2 of the second coating layer may be substantially the same or similar to each other. However, this is not intended to be limiting, the height H1 of the first coating layer and the height H2 of the second coating layer may be different from each other. For example, each of the height H1 of the first coating layer and the height H2 of the second coating layer may range from about 2.5 mm to about 3.1 mm.

In an embodiment of the present disclosure, the width W1 of the first coating layer may be equal to or greater than the width of the first side of the substrate tab 312. For example, the width W1 of the first coating layer may be about 9 mm or greater. A portion of the first coating layer 320 exceeding the width of the first side may cover a portion of the opposite side surfaces of the substrate tab 312.

FIG. 4 illustrates a cross-sectional view of the substrate tab 312 in the height direction according to embodiments of the present disclosure. Referring to FIG. 4, an active material layer 420 similar to the active material layers 212, 222 may be disposed on a portion of the substrate tab 312. For example, a first active material layer 420_1 may be disposed on a portion of a first surface of the substrate tab 312. In some embodiments, a second active material layer 420_2 may be disposed on a portion of a second surface of the substrate tab 312 opposite the first side of the substrate tab 312.

In an embodiment, the substrate tab 312 may include a first region 412 adjacent to the active material layer 420 and a second region 414 extending from the first region 412 in a direction away from the active material layer 420. In some embodiments, the first region 412 adjacent to the active material layer 420 may be a region of the substrate tab 312 where the active material layer 420 is not disposed, the region having a predetermined first height in the direction away from the active material layer 420. For example, a first end of the first region 412 positioned in a direction away from the active material layer 420 may correspond to a first end of the first coating layer 320 positioned in a direction away from the active material layer 420. In some embodiments, the first region 412 and the first coating layer 320 may face each other. In some embodiments, the second region 414 extending in the direction away from the active material layer 420 may be a region having a preset or predetermined second height from the first end of the substrate tab 312 on which the active material layer 420 is not disposed.

In an embodiment of the present disclosure, a portion of the first coating layer 320 may be positioned on the active material layer 420 positioned on the substrate tab 312. For example, a portion of a first segment of the first coating layer 320_1 may be positioned on the first active material layer 420_1 positioned on the first surface of the substrate tab 312. In some embodiments, a portion of a second segment of the first coating layer 320_2 may be positioned on the second active material layer 420_2 positioned on the second side of the substrate tab 312. In this case, the remaining portion of the first segment of the first coating layer 320_1 that is not positioned on the first active material layer 420_1 in FIG. 4 may be spaced apart from the substrate tab 312. Similarly, the remaining portion of the second segment of the first coating layer 320_2 that is not positioned on the second active material layer 420_2 may be spaced apart from the substrate tab 312. However, this is not intended to be limiting, and the remaining portion of the first segment of the first coating layer 320_1 that is not positioned on the first active material layer 420_1 may be disposed or arranged over (e.g., directly over) the substrate tab 312. In some embodiments, the first segment of the first coating layer 320_1 may be bent relative to the first end of the first active material layer 420_1. Similarly, the remaining portion of the second segment of the first coating layer 320_2 that is not positioned on the second active material layer 420_2 may be disposed over (e.g., directly over) the substrate tab 312. In some embodiments, the second segment of the first coating layer 320_2 may be bent relative to the first end of the second active material layer 420_2.

In FIG. 4, a first active material layer 420_1 is shown disposed on a first surface of the substrate tab 312, and a second active material layer 420_2 is shown disposed on a second surface of the substrate tab 312, but these are not intended to be limiting. For example, the first active material layer 420_1 may not be disposed on the first surface of the substrate tab 312, or the second active material layer 420_2 may not be disposed on the second surface of the substrate tab 312. In this case, the coating layer may be disposed directly over the substrate tab 312.

Referring to FIG. 5, some regions of the substrate tab 312 may be surrounded on four sides by the coating layers 320 and 330. For example, the first segment of the first coating layer 320_1 may be disposed on a first surface of the substrate tab 312, and the second segment of the first coating layer 320_2 may be disposed on a second surface of the substrate tab 312. A first segment of the second coating layer 330_1 may be disposed on a first side surface of the substrate tab 312 connected to the first and second surfaces of the substrate tab 312, and a second segment of the second coating layer 330_2 may be disposed on a second side surface of the substrate tab 312 opposite the first side surface of the substrate tab 312. However, this is not intended to be limiting, and the first coating layer 320 may be disposed on only one of the first surface or the second surface of the substrate tab 312 and/or the second coating layer 330 may be disposed on only one of the first side surface or the second side surface of the substrate tab 312.

In an embodiment of the present disclosure, the thickness D1 of the first coating layer 320 may be the same or similar to the thickness D2 of the second coating layer 330. In another example, the thickness D1 of the first coating layer 320 and the thickness D2 of the second coating layer 330 may be different from each other. For example, each of the thickness D1 of the first coating layer 320 and the thickness D2 of the second coating layer 330 may be in a range from approximately 2 µm to approximately 8 µm.

In an embodiment of the present disclosure, the width W2 of the second coating layer may be greater than the thickness of the substrate tab 312. A portion of the second coating layer 330 that is greater than the thickness of the substrate tab 312 may be disposed on at least one of the first surface or the second surface of the substrate tab 312. In another example, the width W2 of the second coating layer may be greater than the sum of the thickness of the substrate tab 312, the thickness of the first segment of the first coating layer 320_1, and the thickness of the second segment of the first coating layer 320_2. A region of the second coating layer 330 may be disposed on at least one of the first segment of the first coating layer 320_1 disposed on the first surface of the substrate tab 312 or the second segment of the first coating layer 320_2 disposed on the second surface of the substrate tab 312.

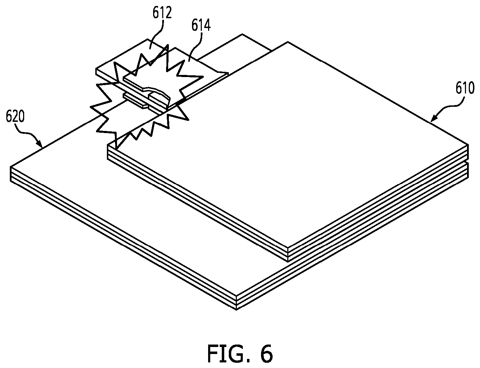

FIG. 6 illustrates a first electrode and a second electrode experiencing a short circuit in a comparative example of the present disclosure. The comparative example in FIG. 6 shows a positive electrode 610 and a negative electrode 620 in an electrode assembly of a secondary battery. In the example shown in FIG. 6, a separator provided between the positive electrode 610 and the negative electrode 620 is not shown.

In the positive electrode 610, a first coating layer 614 may be disposed on at least one of a first surface of the substrate tab 612 or a second surface of the substrate tab 612. In the example shown in FIG. 6, no second coating layer may be disposed on opposite side surfaces connected to the first and second surfaces of the substrate tab 612.

With repeated charging and discharging of the secondary battery shown in the comparative example of FIG. 6, each of the positive electrode 610 and the negative electrode 620 may be repeatedly expanded/contracted. In addition, with repeated charging and discharging of the secondary battery, or depending on the environment of use, the positive electrode 610 and the negative electrode 620 may be exposed to a high temperature environment and be thermally damaged. Accordingly, the separator provided between the positive electrode 610 and the negative electrode 620 may be damaged. Similarly, the first coating layer disposed on the substrate tab 612 may also be damaged. For example, the separator and/or the coating layer may crack or shrink due to heat. In such a case, the side surfaces of the substrate tab 612 may be more exposed to the outside or elements exterior of the substrate tab, and the substrate tab 612 may be more susceptible to contact with other electrodes (e.g., the negative electrode 620). In this case, a short circuit may be formed or more easily formed by the substrate tab 612.

In comparison, in the first electrode 210 according to embodiments of the present disclosure described with reference to FIG. 2, the side surfaces of the substrate tab may be covered by the second coating layer 240. In this case, even if at least one of the separator or the first coating layer 230 provided between the first electrode 210 and the second electrode 220 is damaged, the side surfaces of the substrate tab may be covered by the second coating layer 240. Even if the second coating layer 240 is damaged, the substrate tab may be sufficiently covered by the remaining non-damaged portion of the second coating layer 240.

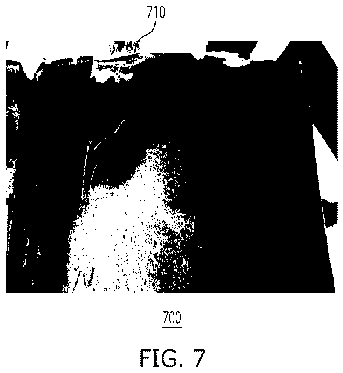

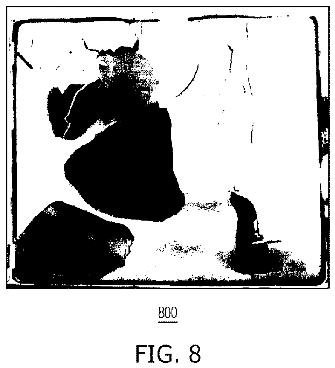

FIG. 7 is an image of a first electrode assembly after a thermal exposure test is performed on a first electrode assembly in a comparative example of the present disclosure. FIG. 8 is an image of a second electrode assembly after a thermal exposure test is performed on the second electrode assembly in an example of the present disclosure. The first electrode assembly shown in FIG. 7 may include substantially the same electrodes as the comparative example described with reference to FIG. 6. For example, in the positive electrode included in the first electrode assembly, the coating layer may not be disposed on opposite side surfaces of the substrate tab.

A first example 700 may show a portion of a first electrode assembly that has been subjected to a thermal exposure test at about 130°C. Referring to FIG. 7, it may be seen that in the first example 700, ignition has started in a first region 710. The first region 710 may be the region where the substrate tab of the positive electrode plate is positioned. In some embodiments, in a high temperature environment, the separator provided between the positive electrode plate and the negative electrode plate may be damaged, and the coating layer placed or disposed on the first surface of the substrate tab of the positive electrode plate and the second surface of the substrate tab opposite the first surface of the substrate tab may be damaged, and may increase the risk of a short circuit. Accordingly, the first electrode assembly including the comparative example may be susceptible to fire hazards.

FIG. 8 is an image 800 of a second electrode assembly after a thermal exposure test is performed on the second electrode assembly according to one embodiment of the present disclosure. The second electrode assembly shown in FIG. 8 may include substantially the same electrodes as the embodiment described with reference to FIG. 2. For example, a coating layer may be disposed on a first side surface or opposite side surfaces of a substrate tab of a positive electrode included in the second electrode assembly.

The image 800 of FIG. 8 is that of the second electrode assembly that has been subjected a thermal exposure test at about 130°C. The second electrode assembly in the image 800 of FIG. 8 has not been ignited. Instead, the image 800 shows that the separator included in the second electrode assembly has been partially broken/damaged by thermal shrinkage. In some embodiments, even if the separator provided between the positive electrode plate and the negative electrode plate is damaged in a high temperature environment, and the coating layer placed or disposed on the substrate tab of the positive electrode plate (e.g., the first coating layer 230 and the second coating layer 240 of FIG. 2) is damaged, a short circuit may not occur. Due to the coating layer disposed on the side surface(s) of the substrate tab, the secondary battery including the electrode according to embodiments of the present disclosure may be used more safely due to a reduced risk of fire.

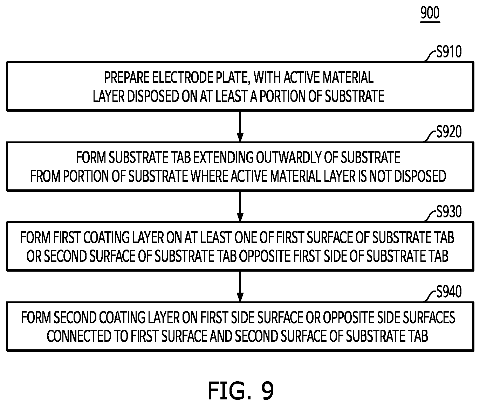

FIG. 9 illustrates a flowchart 900 of an example secondary battery electrode manufacturing method according to an embodiment of the present disclosure. A secondary battery electrode manufacturing apparatus may be an apparatus for manufacturing a secondary battery electrode according to embodiments of the present disclosure.

In an embodiment, the secondary battery electrode manufacturing method may begin by preparing an electrode plate, with an active material layer disposed on at least a portion of a substrate, by a secondary battery electrode manufacturing apparatus in S910.

In an embodiment, the secondary battery electrode manufacturing apparatus may form a substrate tab extending outwardly of the substrate from a portion of the substrate where the active material layer is not disposed in S920.

In an embodiment, the secondary battery electrode manufacturing apparatus may form a first coating layer on at least one of a first surface of the substrate tab or a second surface of the substrate tab opposite the first side of the substrate tab in S930.

In an embodiment, the secondary battery electrode manufacturing apparatus may form a second coating layer on a first side surface or opposite side surfaces connected to the first surface and the second surface of the substrate tab in S940. For example, the first and second coating layers may be formed together by surrounding the first surface, the second surface, and the first side surface of the substrate tab or the first surface, the second surface, and the opposite side surfaces of the substrate tab with a coating tape. In another example, the second coating layer may be formed by applying a coating solution to the first side surface or opposite side surfaces of the substrate tab. In some embodiments, the first coating layer and the second coating layer may be formed integrally, but are not limited thereto.

In an embodiment, the substrate tab includes a first region adjacent to the active material layer and a second region extending from the first region in a direction away from the active material layer, and the first coating layer and the second coating layer may be disposed on the first region.

In an embodiment, the electrode plate is a positive electrode plate, and the height of the first coating layer and the height of the second coating layer may be determined based on the difference in height between the positive electrode plate and the negative electrode plate.

In an embodiment, the second coating layer may electrically insulate the first side or the opposite sides of the substrate tab.

In an embodiment, the substrate tab includes a first region adjacent to the active material layer and a second region extending from the first region in a direction away from the active material layer, and the first coating layer and the second coating layer may be disposed on the first region.

In an embodiment, the first coating layer may have a width of 9 mm or more. The width of the second coating layer may be from 12 µm to 18 µm. The width of the second coating layer may be greater than the thickness of the substrate tab. Each of the height of the first coating layer and the height of the second coating layer may range from approximately 2.5 mm to approximately 3.1 mm. Each of the thickness of the first coating layer and the thickness of the second coating layer may be from approximately 2 µm to approximately 8 µm. The second coating layer may include at least one of polyimide or ceramic.

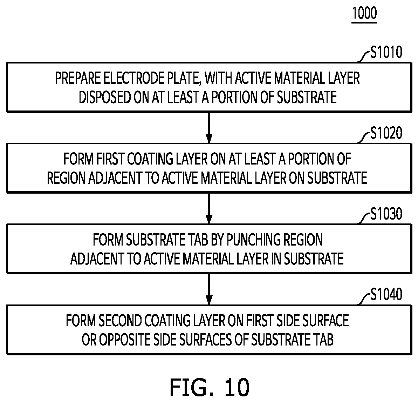

FIG. 10 illustrates another flowchart 1000 of an example secondary battery electrode manufacturing method according to one embodiment of the present disclosure. A secondary battery electrode manufacturing apparatus may be an apparatus for manufacturing a secondary battery according to embodiments of the present disclosure. The secondary battery electrode manufacturing apparatus may be an apparatus for performing a secondary battery electrode manufacturing method different from the secondary battery electrode manufacturing method described with reference to FIG. 9. However, a secondary battery electrode manufactured by the secondary battery electrode manufacturing method described with reference to FIG. 10 may be the same as the secondary battery electrode described with reference to FIG. 9.

In one or more embodiments, the secondary battery electrode manufacturing apparatus may prepare an electrode plate having an active material layer disposed on at least a portion of the substrate in S1010.

In one or more embodiments, the secondary battery electrode manufacturing apparatus may form a first coating layer on at least a portion of a region adjacent to the active material layer on the substrate in S1020.

In one or more embodiments, the secondary battery electrode manufacturing apparatus may form a substrate tab by punching a region adjacent to the active material layer in the substrate in S1030.

In one or more embodiments, the secondary battery electrode manufacturing apparatus may form a second coating layer on the first side surface or opposite side surfaces of the substrate tab in S1040.

The flowcharts of FIGS. 9 and 10 and the above description are only illustrative of the present disclosure, but the scope of the present disclosure is not limited to the flowcharts of FIGS. 9 and 10 and the above description. For example, one or more of the operations (or steps) in the flowcharts and the above description may be added/altered/deleted, the order of one or more of the operations may be changed, and one or more of the operations may be performed simultaneously or concurrently with one another.

Although the present disclosure has been described above with respect to embodiments thereof, the present disclosure is not limited thereto. Various modifications and variations can be made thereto by those skilled in the art within the scope of the present disclosure as defined by the appended claims.

## Claims

1. A secondary battery electrode (210, 220, 310) comprising:
an electrode plate (212, 214, 222, 224), with an active material layer (212, 222, 420) on at least a portion of a substrate (214, 224);
a substrate tab (112, 114, 216, 312, 612) extending outward of the substrate (214, 224) from a region of the substrate (214, 224) free of the active material layer (212, 222, 420);
a first coating layer (230, 320, 320_1, 320_2, 614) on at least one of a first surface of the substrate tab (112, 114, 216, 312, 612) or a second surface of the substrate tab (112, 114, 216, 312, 612) opposite the first surface of the substrate tab (112, 114, 216, 312, 612); and
a second coating layer (240, 330, 330_1, 330_2) on at least one of a first side surface of the substrate tab (112, 114, 216, 312, 612) or a second side surface of the substrate tab (112, 114, 216, 312, 612) opposite the first side surface of the substrate tab (112, 114, 216, 312, 612),
wherein the first side surface and the second side surface of the substrate tab (112, 114, 216, 312, 612) are connected to the first surface and the second surface of the substrate tab (112, 114, 216, 312, 612).

2. The secondary battery electrode (210, 220, 310) as claimed in claim 1, wherein the substrate tab (112, 114, 216, 312, 612) comprises a first region (412) adjacent to the active material layer (212, 222, 420) and a second region (414) extending from the first region (412) in a direction away from the active material layer (212, 222, 420), and
wherein the first coating layer (230, 320, 320_1 320_2, 614) and the second coating layer (240, 330, 330_1 330_2) are on the first region (412).

3. The secondary battery electrode (210, 220, 310) as claimed in claim 1 or 2, wherein a width (W1) of the first coating layer (230, 320, 320_1, 320_2, 614) is equal to or greater than 9 mm.

4. The secondary battery electrode (210, 220, 310) as claimed in claim 1 or 2, wherein a width (W1) of the first coating layer (230, 320, 320_1, 320_2, 614) is in a range from approximately 12 µm to approximately 18 µm.

5. The secondary battery electrode (210, 220, 310) as claimed in claim 1 or 2, wherein each of a width (W1) of the first coating layer (230, 320, 320_1, 320_2, 614) and a width (W2) of the second coating layer (240, 330, 330_1, 330_2) is in a range from approximately 2 µm to approximately 8 µm.

6. The secondary battery electrode (210, 220, 310) as claimed in any one of the preceding claims, wherein a width (W2) of the second coating layer (240, 330, 330_1, 330_2) is greater than a thickness of the substrate tab (112, 114, 216, 312, 612).

7. The secondary battery (100) electrode (210, 220, 310) as claimed in any one of the preceding claims, wherein each of a height (H1) of the first coating layer (230, 320, 320_1, 320_2, 614) and a height (H2) of the second coating layer (240, 330, 330_1, 330_2) is in a range from approximately 2.5 mm to approximately 3.1 mm.

8. The secondary battery electrode (210, 220, 310) as claimed in any one of the preceding claims, wherein the second coating layer (240, 330, 330_1, 330_2) comprises at least one of polyimide or ceramic.

9. The secondary battery electrode (210, 220, 310) as claimed in any one of the preceding claims, wherein the electrode plate (212, 214, 222, 224) is a positive electrode plate (212, 214).

10. The secondary battery electrode (210, 220, 310) as claimed in claim 9, wherein a height (H1) of the first coating layer (230, 320, 320_1, 320_2, 614) and a height (H2) of the second coating layer (240, 330, 330_1, 330_2) are determined based on a height difference (A) between the positive electrode plate (212, 214) and a negative electrode plate (222, 224).

11. The secondary battery electrode (210, 220, 310) as claimed in any one of the preceding claims, wherein the second coating layer (240, 330, 330_1, 330_2) electrically insulates the first side surface or the second side surface of the substrate tab (112, 114, 216, 312, 612).

12. The secondary battery electrode (210, 220, 310) as claimed in any one of the preceding claims, wherein the first coating layer (230, 320, 320_1, 320_2, 614) and the second coating layer (240, 330, 330_1, 330_2) are formed integrally.

13. A manufacturing method for a secondary electrode (210, 220, 310), comprising:
preparing an electrode plate (212, 214, 222, 224) with an active material layer (212, 222, 420) placed on at least a portion of a substrate (214, 224);
forming a substrate tab (112, 114, 312, 612) 216 extending outward of the substrate (214, 224) from a region of the substrate (214, 224) free of the active material layer (212, 222, 420);
forming a first coating layer (230, 320, 320_1, 320_2, 614) on at least one of a first surface of the substrate tab (112, 114, 216, 312, 612) or a second surface of the substrate tab (112, 114, 312, 612) 216 opposite the first surface of the substrate tab (112, 114, 216, 312, 612); and
forming a second coating layer (240, 330, 330_1, 330_2) on at least one of a first side surface of the substrate tab (112, 114, 216, 312, 612) or a second side surface of the substrate tab (112, 114, 216, 312, 612) opposite the first side surface of the substrate tab (112, 114, 216, 312, 612),
wherein the first side surface and the second side surface of the substrate tab (112, 114, 216, 312, 612) are connected to the first surface and the second surface of the substrate tab (112, 114, 216, 312, 612).

14. The secondary electrode (210, 220, 310) manufacturing method as claimed in claim 13, wherein the forming of the second coating layer (240, 330, 330_1, 330_2) comprises forming the first coating layer (230, 320, 320_1, 320_2, 614) and the second coating layer (240, 330, 330_1, 330_2) together by surrounding the first surface, the second surface, and the first side surface of the substrate tab (112, 114, 216, 312, 612), or the first surface, the second surface, and the second side surface of the substrate tab (112, 114, 216, 312, 612), with a coating tape.

15. The secondary electrode (210, 220, 310) manufacturing method as claimed in claim 13 or 14, wherein the forming of the second coating layer (240, 330, 330_1, 330_2) comprises forming the second coating layer (240, 330, 330_1, 330_2) by applying a coating solution to the first side surface or the second side surface of the substrate tab (112, 114, 216, 312, 612).
